# EUROPEAN PATENT APPLICATION

(11) **EP 1 872 657 A1**
(43) Date of publication of application: **02.01.2008**
(21) Application number: 06725789.9
(22) Date of filing: 28.02.2006
(51) Int. Cl.: A01M 7/00, B05B 9/08

(54) **PORTABLE AGRICULTURAL SPRAYER**

(30) Priority: 04.03.2005 ES 200500506
(71) Applicant: Central Agricola Bovi, S.L., 25004 Lleida (ES)
(72) Inventor: BONET VILLORIA, Fernando, E-25004 Lleida (ES); FENOLLOSA ARTES, Felip, E-25004 Lleida (ES)
(74) Representative: Lanza Murciano, Marino Manuel
(86) International application number: PCT/ES2006/000091
(87) International publication number: WO 2006/092455

(57) **Abstract**

Consisting of a spray rod (1) formed by a rod body (105) ending in a spray nozzle, a valve body (103) connected to a handgrip (101) holding a liquid hose fed from a tank (2) of liquid to be sprayed. The spray has a handle (5) that moves axially in a cylinder (8) to pressurise the liquid in the tank (2) and is also extendible with respect to the tank (2) which is mounted on a base (3), independent of the handle (5), and fitted with wheels (4) that allow the spray to be inclined and wheeled, by pulling the handle (5) in its extended position.

## Description

### PURPOSE OF THE INVENTION

This invention refers to a portable agricultural spray for use in small areas or those with difficult access, of the type which has a tank containing the liquid to be sprayed together with a pumping system and a spray rod connected to the tank.

The object of the invention is that the spray combines a system of wheels to facilitate its movement with constructional considerations including ergonomics, operational efficiency and the spray's manufacturing and assembly processes.

A further object of the invention is a spray rod of the type that connects a spray nozzle with the tank using a flexible hose and, more specifically, refers to the special structure of the valve allowing the product to pass to the nozzle as well as to the latter.

### BACKGROUND TO THE INVENTION

Pressure sprays used in pesticide treatments and other applications basically consist of a sealed tank containing the product to be sprayed and a pumping system based on a manually-operated piston installed on a cylinder and fitted with a non-return valve to prevent the liquid under pressure from escaping via the cylinder. A lid forms the connection between the tank and the pumping system and a base may be used to protect the tank or stabilise the assembly.

When the operator operates the piston, the air above the liquid level in the tank is pressurised. When the pressure is considered acceptable, the operator sprays liquid using the rod until the pressure drops below a certain level. The operator operates the piston again to continue the operation The spray normally has a safety valve that limits the working pressure to a maximum value.

This type of spray includes some in which the handle is designed both for carrying and for operating the piston; the handle is located axially inside the tank, emerging at the top through a lid that fulfils the functions of sealing and filling.

Another technical improvement in this equipment has been the increasingly reliable fixing of the piston in the cylinder, trying not to increase the complexity of the assembly. The accidental parting of the piston due to an excessive axial movement has been prevented, this being compatible with the removal of the piston for maintenance without the user coming into contact with the remains of the product to be sprayed, the assembly being designed with a minimum number of parts.

With regard to the means of spraying, the sprays include an outlet connected to a flexible hose at the end of which there is a rod. This rod has a handgrip with a control valve operated by a hinged lever operated by the operator using the hand holding this assembly. There is a nozzle at the end of the rod which converts the outflow of liquid under pressure into a fine spray.

### DESCRIPTION OF THE INVENTION

The portable agricultural spray that constitutes the object of this invention has a tank of liquid to be sprayed as well as a handle with pumping functions to pressurise the liquid to be sprayed to the exterior through a spray rod and is fundamentally notable because the tank is mounted on a base equipped with wheels, independent of the handle, designed to allow the inclining of the spray and its wheeling by pulling the handle in its extended position.

The spray is designed structurally according to an integrated design that favours constructional simplicity and economy of manufacture, these features being reflected in elements such as the lid covering the tank.

The lid of the spray integrates most of the equipment's components. More specifically, it has two side lugs for fixing belts to facilitate carrying it worn across the chest, a lug for fixing the rod, a central threaded hole for fixing the pumping unit, a hole containing the pressure release valve to guarantee the maximum internal pressure in the tank, and a hole to which the spray rod hose is connected on the outside with an aspiration pipe with filter inside to direct the liquid to the hose. The lid is fixed to the tank with a thread and its sealing is ensured with an O-ring.

The side lugs are obtained directly during the manufacture of the lid and are designed ergonomically as an anchoring point for the belts.

An O-ring is used to fix a cylinder to the central threaded hole in the lid, with the handle/piston moving inside it within the tank

The pressure relief valve has a small stem with a plug and a spring rated at the maximum pressure that allows the axial movement of the small stem connecting the inside of the tank with the atmosphere.

The system for fixing the spray hose rod to the lid consists of a small conical nozzle and a plug, drilled to allow the outlet to the hose. Both elements are joined by a threaded joint. The system consists of inserting the nozzle protruding from the lid into the hose and closing it with the plug. Thus, the plug traps the hose on the conical part of the nozzle, preventing its loosening even when pulled.

In correspondence with the nozzle inside the tank there is a semirigid pipe with a filter connected at its other end. Therefore the equipment has a filtering area in the inlet of liquid in the tank to the rod to prevent solid foreign bodies, thus reducing the entry of these particles to the hose. Thus, when the liquid enters the spray nozzle, it has been filtered to prevent the nozzle being clogged by foreign bodies.

The spray is also notable in that it includes a handle/piston with pumping functions and as a means of carrying the equipment in collaboration with the support base equipped with wheels. This handle has a totally ergonomic shape that allows the user to carry the equipment easily by pulling on it and slightly inclining the equipment.

Unlike other systems, the design of the handle has been conceived as a single piece using plastic injection moulding to reduce the number of parts in the spray assembly and to facilitate its assembly. The handle has a variable cross-section and allows single-handed or double-handed pumping, at the user's convenience.

The lid contains rebates to fit the ends of the handle to it, this position allowing the spray to be carried; this position also facilitates opening the lid by transmitting the necessary torque in the open/close movement.

The handle is extended with an axial stem that ends in a piston that evenly shares the forces and is equipped with an O-ring to seal it during the downward stroke. Air enters the tank during the downward stroke to pressurise the liquid and a non-return valve prevents the liquid from passing from the tank to the cylinder as the piston rises.

The liquid under pressure exits at the bottom of the pressurised tank via an outlet pipe to the rod, thus guaranteeing that only liquid and not air is expelled.

The cylinder in which the stem moves is formed from two sleeves joined with a threaded joint and an O-ring to ensure the sealing. There is an upper sleeve that is threaded directly to the lid, the sealing being ensured by an O-ring, and a lower sleeve with a hole at its base containing the non-return valve. The construction of the sleeve in two pieces notably reduces the manufacturing cost of this piece without reducing the product's performance.

The up and down movements of the stem are guided by a guide plug that threads into the upper sleeve which in turn is threaded into the lid. This guide plug forms an intermediate piece between the stem and the upper sleeve so that it is not necessary to remove the sleeve in order to remove the stem.

If necessary, the piston stem may be removed to change the joint without needing to remove the piston sleeve. This is achieved by unthreading the guide plug piece mounted on the inner thread of the upper sleeve. This facilitates the removal and replacement of the joint if necessary. All of this in turn reduces the risk of the user's contacting residues of chemical products that may remain inside the tank.

To fix the stem to the equipment, the guide plug piece contains rebates that align with protuberances on the handle and allow it to be fixed, slightly turning the handle to lock it to the lid, allowing the spray to be hang-carried in this position.

The problem of carrying the spray, which in current equipment consists of carrying it hung from the shoulder or the hand, is solved in this invention by equipping the system with wheels. The spray has a base which supports it vertically without the wheels operating, thus guaranteeing the stability of the equipment. The wheels are fixed by clips to axles on the sides of the base.

To carry the equipment, the piston handle is extended and the equipment inclined until it reaches a position that is comfortable for the user, who pulls the equipment on its wheels.

The base of the equipment has fluted platforms on which the user can stand to prevent the tank's moving during pumping and also to hold the tank when opening or closing the lid. One of these platforms contains a hole that acts as a housing for the point of the nozzle on the spray rod.

This spray also allows the use of tanks of different capacities, for example, of five and seven litres, retaining the same constructional elements of the spray for both capacities with the same universal design. The tanks have the same exterior diameters and the capacity differences are obtained with different heights and by coning their side walls so that the user can use both ranges simply by exchanging the tank.

The tank has legs underneath to guarantee the stability of the equipment in the vertical position. The inclusion of these legs in the design of the tank increases its performance without affecting manufacturing costs since the tank is obtained directly by moulding.

Another improvement of the invention refers to the spray rod which basically consists of a control valve, a spray rod and a nozzle.

The control valve is of the type that includes a hinged lever as the means of operating the valve and has three working positions, as required by current standards, thanks to including a trigger that allows this operation to be carried out with one single hand.

The lever ends in a valve body containing a transverse conduit where the inlet conduit through the handgrip and the outlet conduit through the rod to the spray nozzle converge, with the feature that these two conduits are out of alignment in height and separated by the control valve shutter which has a conical shape and an O-ring to be supported on a perimeter step of the transverse conduit in the closed position or to move away to a greater or lesser extent with respect to this step to allow a greater or lesser flow of fluid.

This shutter forms part of a bolt which can be coupled through the lower end of the transverse conduit in the valve body, open at both ends, sealed with a plug, this bolt being able to move snugly in a cylindrical section of the transverse conduit which, with the help of an O-ring, keeps the seal at the open end of the transverse conduit where there is also an annular throat concentric with this conduit, closed inside, to support a spring at its bottom that pushes the bolt upward to close the valve.

There is an elbow coupled to the rod pipe into which an adjustable conical nozzle or any other type of standard nozzle can be fitted with its filter The nozzle consists of a hollow cylinder with a threaded exterior for fixing the elbow, with its front end closed, with three helical slots arranged at equal distances in the closed end that communicate with its hollow interior through two side openings to form the outlet of the liquid, slots which in turn discharge in a front chamber inside a nut The nut is coupled on its exterior and threaded on the elbow, allowing its distance to be adjusted with respect to the nozzle to vary the spray cone formed at the outlet hole while the above mentioned slots generate turbulence in the liquid to be sprayed.

Finally, it should be noted that, unlike equipment on the market, the spray equipment is made entirely of plastic. Therefore, all its elements (except for a bolt and a filter in the spray rod) are obtained by plastic injection and moulding. This provides a more aesthetic and recyclable product overall. The joints of the pieces are of the same material and are threaded or clipped, thus avoiding increasing the number of pieces, which would make the equipment assembly more difficult.

### DESCRIPTION OF THE DRAWINGS

To complement this description and to help in the better understanding of the features of the invention, according to a preferred example of its practical manufacture, this description is accompanied, as an integral part, with a set of drawings showing the following as illustration and not as limitation:
Figure 1 shows a perspective view of the spray equipment.

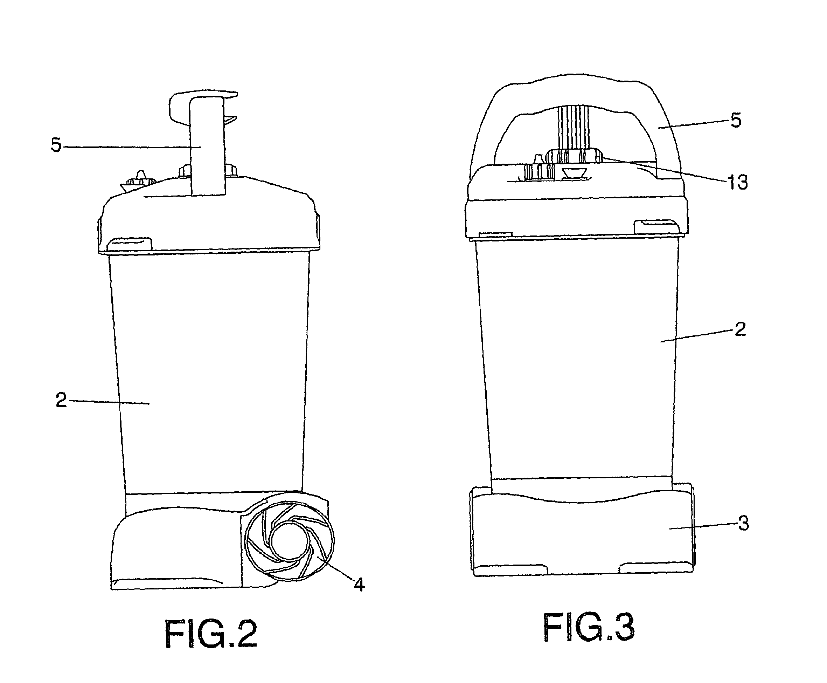

Figure 2 shows a side view of the spray equipment in which the rod is not shown.
Figure 3 shows an elevation view of the spray equipment without the rod.
Figure 4 shows a plan view of the spray equipment without the rod.
Figure 5 shows a cross-section of the spray equipment.
Figure 6 shows a view of the spray equipment without the rod in a partially cutaway view showing its constituent elements.
Figure 7 shows a detailed view of the over-pressure valve.
Figure 8 shows a detailed view of part of the lid with the nozzle connected to the spray rod hose and the suction tube.
Figure 9 shows a perspective view of the spray rod
Figure 10 shows a lateral elevation and a lateral cross section of the area of the spray rod which corresponds to its handgrip, equipped with the control valve shown in the free action position of the lever.
Figure 11 shows a similar view to the above figure with the same assembly in that figure with the control valve blocked in the closed position.
Figure 12 shows the same assembly in the above figures with the valve blocked in its maximum open position.
Figure 13 shows in detail a side elevation and cross section of the nozzle in the spray rod.
Figure 14 shows the same assembly in the above figure in perspective

### PREFERRED EMBODIMENT OF THE INVENTION

The following uses the figures to describe a preferred embodiment of the portable agricultural spray that forms the subject of this invention.

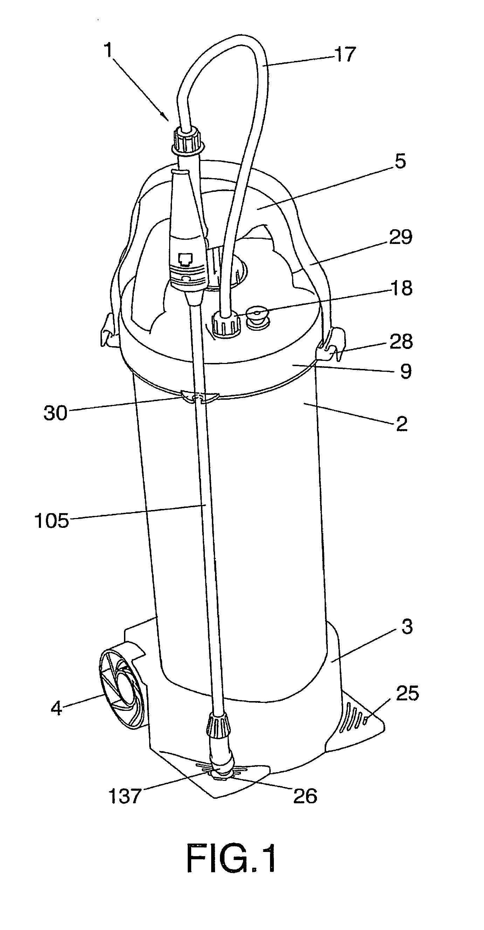

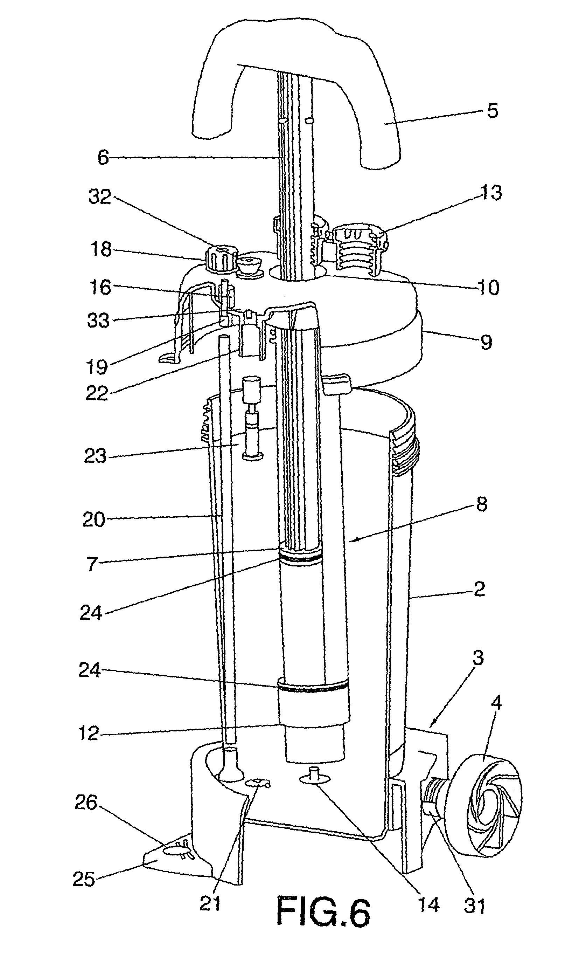

With reference to Figures 1 and 6, it can be seen that the spray is of the type that has a spray rod (1) fed from a tank (2) of liquid to be sprayed from which extends a handle (5) extended with a stem (6) ending in a piston (7) moving axially in a cylinder (8) to pressurise the liquid in the tank (2).

The spray is notable basically because it has an extending handle (5) with respect to the tank (2) which is mounted on a base (3) independent of the handle (5) and fitted with wheels (4) that allow the spray to be inclined and wheeled by pulling on the handle (5) in its extended position.

As can be seen in Figure 6, the spray is notable basically for having a lid (9) designed as a single piece integrating the special elements of the spray.

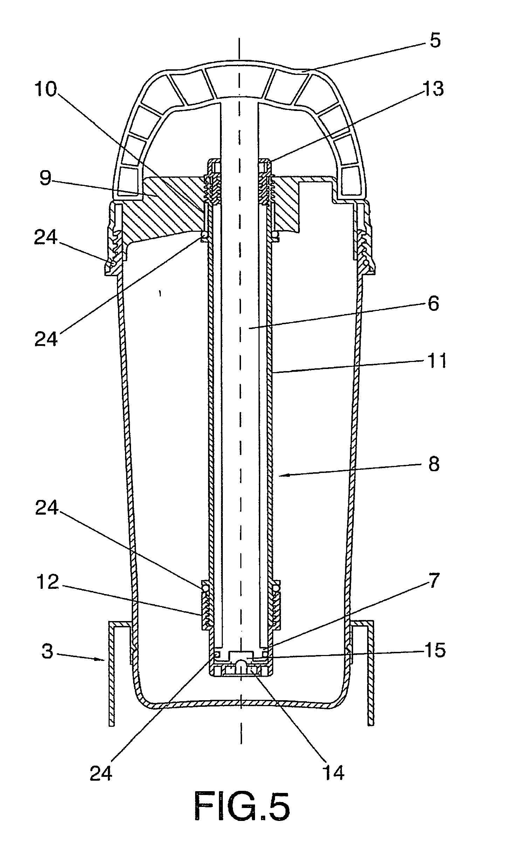

The lid (9), as shown in Figure 5, is threaded onto the top of the tank (2), closing it, and has a central drilling (10) to allow the stem (6) to pass into the cylinder (8). The cylinder (8) consists of an upper sleeve (11) and a lower sleeve (12), threaded together, in which the upper sleeve (11) is threaded into the central drilling (10), there being a guide plug (13) between the upper sleeve (11) and the stem (6) threaded into the upper sleeve (11) and forming the guide for the movement of the stem (6).

The lower sleeve (12) has a hole in its base housing a non-return valve (14) that prevents the liquid in the cylinder (8) from rising, and the piston (7) has a centred cavity (15) in its lower surface in correspondence with this valve (14) allowing the valve (14) to close so that the piston can make a complete downward stroke to the end of the cylinder (8).

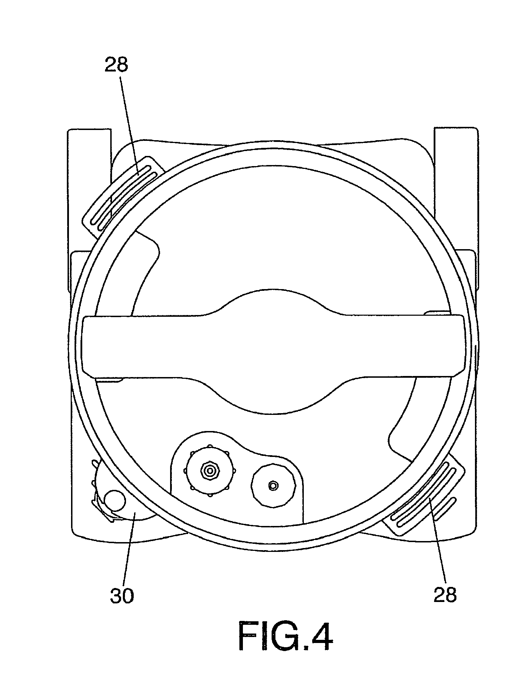

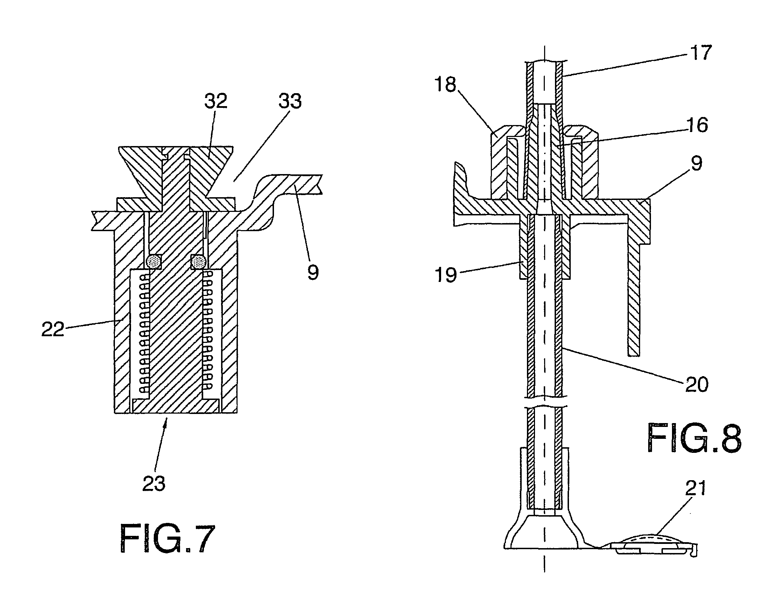

As can be seen in Figure 8, the lid (9) also has a depression (33) containing an exterior nozzle (16) to which a hose (17) is coupled for the spray rod (1) and that is fixed by a plug (18), additionally on its lower surface there is an interior nozzle (19) in correspondence with the exterior nozzle (16) to which an outlet pipe (20) inside the tank (2) is coupled, with a filter (21) at its other end.
The lid (9) also has lugs (28) to anchor carrying belts (29), as can be seen in Figure 4, and a lug (30) to hold the spray rod (1), also shown in Figure 1. Figures 6 and 7 show that the lid (9) has a receptacle (22) housing a pressure relief valve (23) that has an exterior plug (32) housed in a depression (33) in the lid (9) in which the plug (18) of the hose (17) is also fitted so that neither part protrudes beyond the highest part of the lid (9).

As can be seen in Figure 5, there are seals (24) between the upper sleeve (11) and the lower sleeve (12), between the upper sleeve (11) and the lid (9), as well as on the side of the piston (7) itself and between the lid (9) and the tank (2).

The base (3) has fluted platforms (25), as can be seen in Figure 1, which protrude from its lower side to form support surfaces for the spray, which can be pressed to ensure its stable position. One of these platforms (25) has a hole (26) to house the nozzle (137) nut on the spray rod (1) Likewise, and as can be seen in Figure 6, co-linear axles (31) protrude from both sides of the base (3), to which the wheels (4) are clipped

The spray has been designed so that it keeps the universal elements described and includes tanks (2) with the same dimensions at the ends but with variable capacities. The various capacities of the tanks are obtained by various heights and coning in their side walls, thus allowing a possible embodiment in which the tank (2) has walls expanding upward to provide a tank with greater capacity.

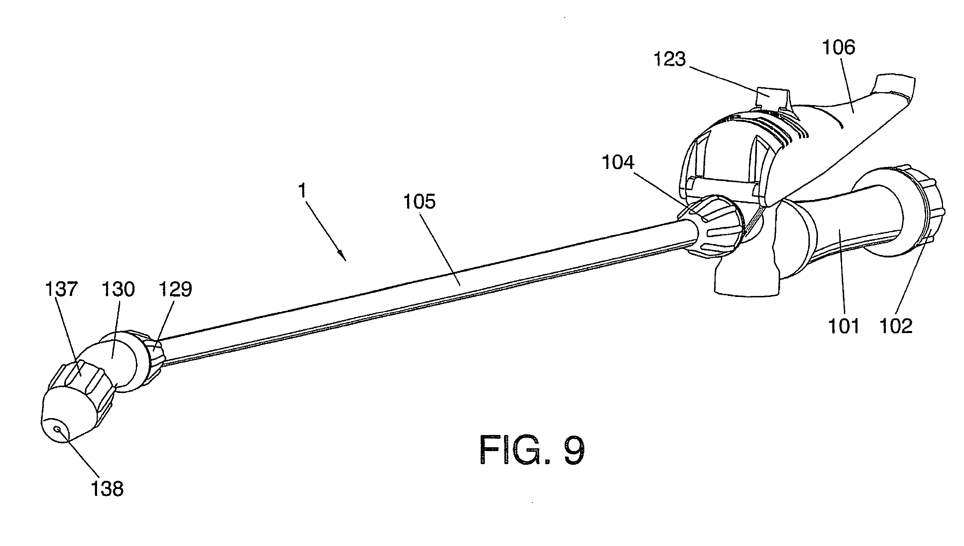

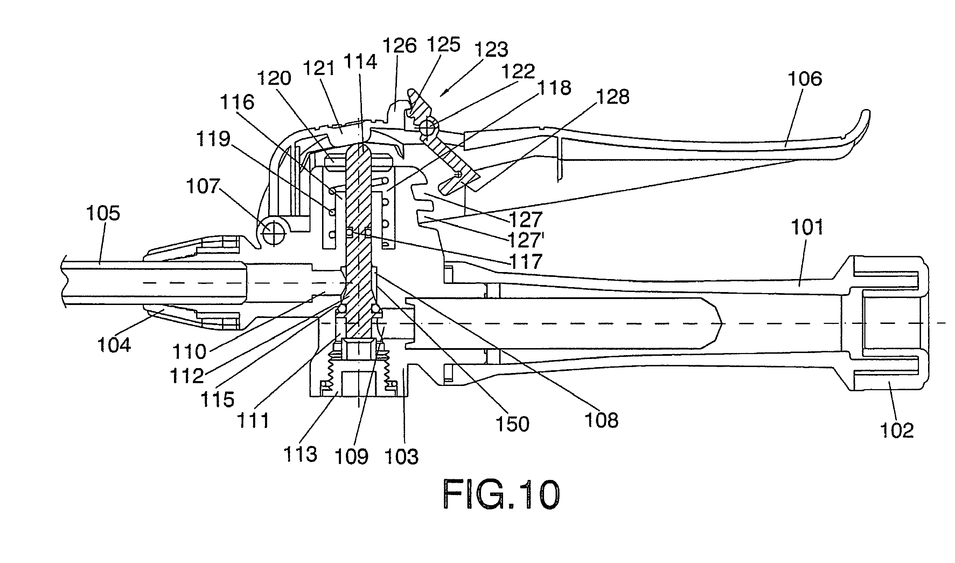

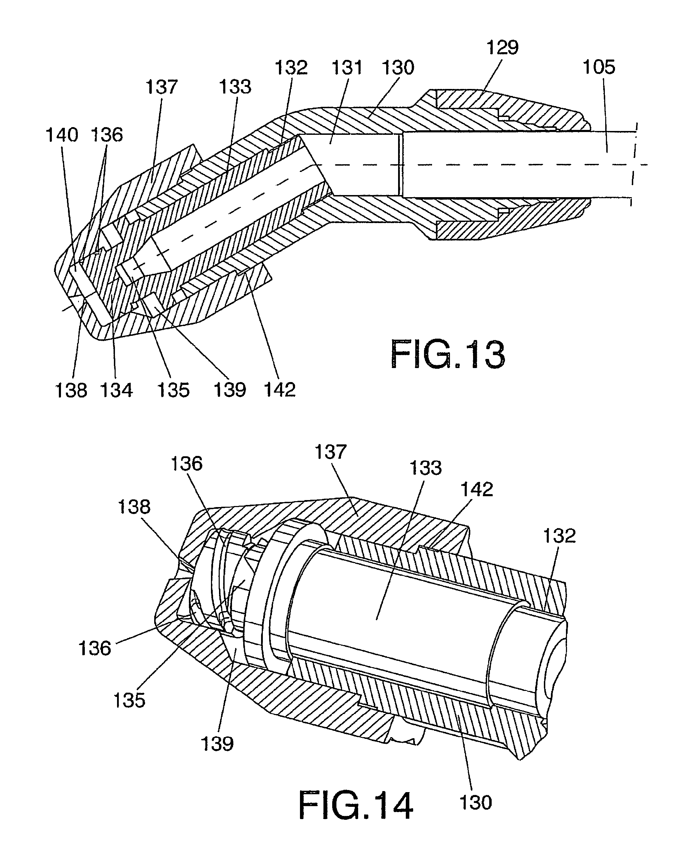

The spray rod (1) is of the type used to apply pesticides and includes a handgrip (101), finished with a coupling joint (102) at one of its ends for the hose connecting the rod (1) to the tank (2), as can be seen in Figure 9, and a valve body or tap body (103) at its other end, coupled to the rod body (105) by a second joint (104), its free end ending in a spray nozzle as shown in Figure 13, also including a lever (106), hinged on the body itself (103) with a hinge (107), which opens and closes the valve, as shown in Figure 10.

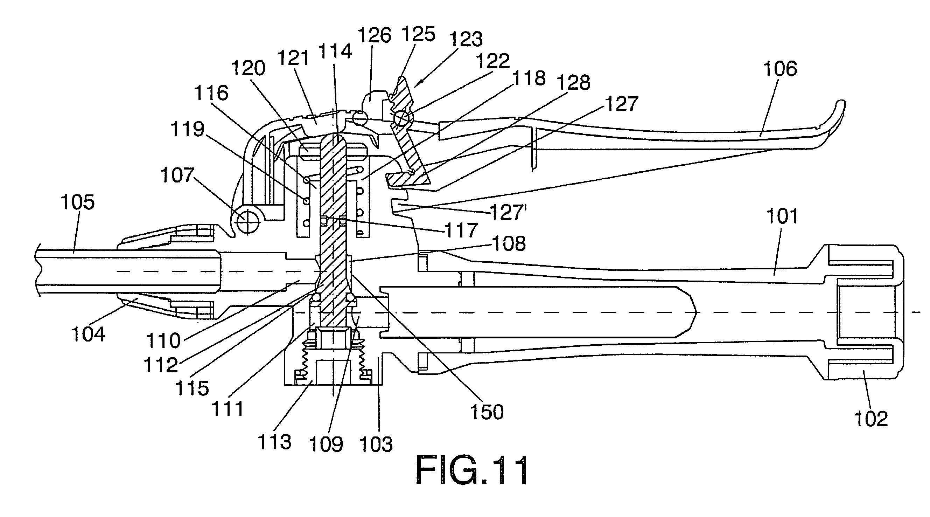

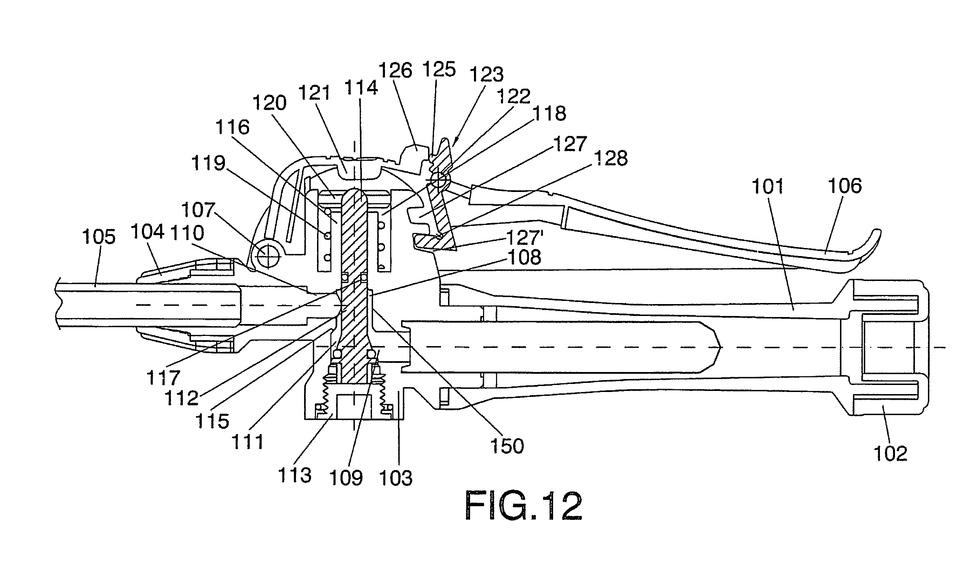

Thus, in accordance with the invention, the control valve body (103) contains a transverse conduit (150), open at its ends, joining an inlet conduit (109) with an outlet conduit (110) located at different levels. The transverse conduit (150) has a lower sector (111) with a larger diameter that allows the coupling with the transverse conduit (150) of a shutter (112) and which, after coupling, is closed with the help of a plug (113). The shutter (112) forms part of a bolt (114) in which the shutter (112) is defined by a conical expansion that can be supported on a perimeter step (115) defining an intermediate sector (108) in the transverse conduit (150) and the lower sector (111) in the closed position shown in Figures 10 and 11, or to move away from the step in the open position, as shown in Figure 12.

The bolt (114) fits tightly through an upper sector (116) in the transverse conduit (150), sealed to it with an O-ring (117), and with this upper sector (118) surrounding the transverse conduit (150) to form a circular, coaxial throat (118) with a spring (119) at its bottom which acts on a stud (120) fixed transversely to the bolt (114) near its upper end and projecting upward, that is, to the position of the shutter (112) seating on the step (115) shown in Figure 10, so that from this closed position the valve is opened when the lever (106) is operated and an interior projection (121) on it acts on the rounded free end of the bolt (114), moving the shutter (112) axially against the spring (119).

As a complement to the described structure, the lever (106) has a small opening with a transverse stud (122) near the control valve body (103) on which there is a hinged trigger (123); this trigger (123) can pivot towards the valve body (103) when the operator presses it with his thumb, when it is freed from the lever (106) to which it is locked by a protuberance (125) clipped in a small arm (126) that is an extension of the lever (106), as can be seen in Figure 10, so that in the position shown in the figure, the trigger (123) is inoperative and the lever (106) can be operated freely.

When the protruding section of the trigger (123) is made to pivot with the thumb tip of the same hand that is holding the handle (101), the protuberance of the trigger (125) that fixes it to the lever (106) exits the arm of the lever (126) and the trigger (123) is free to pivot towards the valve body (103) where there are two superimposed notches (127-127') into which fits a elbowed arm (128) at the lower end of the trigger (123) so that if the trigger (123) is operated with the lever (106) at its farthest point from the handgrip, that is in the rest position shown in Figure 10, the blocking shown in Figure 11 is achieved, with the shutter (112) locked by way of a safety catch, making it impossible to open the valve accidentally, while if the trigger (123) is operated with the lever (106) at its closest to the handle (101), the arm (128) on the former locks in the notch (127') with the valve fully open as shown in Figure 12, holding it there without the need for the operator to press the lever (106) against the handgrip (101).

Operating the trigger (123) in the opposite direction with the same thumb or finger returns it to the position in Figure 10 in which the lever (106) is freed, and from the closed valve position, various degrees of opening or full opening of the valve can be achieved by suitably controlling the distance between the lever (106) and the handgrip (101), parallel to the movement of the shutter (112) with respect to its seating (115).

As can be deduced from the above, operating the valve is very easy, with a structure that is much simpler than conventional ones, with the notable advantage that the return spring (119) is insulated from the pesticide, that is, it is kept dry, which considerably increases its life and, as a result, that of the control valve overall, the other components of which are preferably made by plastic injection moulding.

At its other end, the rod (105) is fixed by means of a joint (129) to an elbow (130) which, as well as an axial hole (131) to allow the pesticide to pass, contains a wide, internally threaded section (132) to couple and fix the nozzle (133), of any conventional type. The nozzle (133) has a corresponding internal thread and its hollow interior ends in a closed front end (134) located outside the elbow (130) as can be seen in Figures 13 and 14, with the special characteristic that immediately behind this front end (134), the nozzle (133) has two side outlets (135) for the pesticide, which direct it to three equally spaced helical slots (136).

The helical slots (136) communicate with an annular chamber (139) before the slots (136) into which the side outlets (135) in the nozzle (133) discharge. This circular chamber (139) is limited by an exterior nut (137) threaded (142) onto the front end of the elbow (130), which has a central outlet hole (138) through which the liquid to be sprayed exits.

At the bottom of the inside of the nut (137) there is a front chamber (140) in which turbulence is generated in the pesticide liquid before it exits to the exterior. Depending on the distance between the nut (137) and the nozzle (133), as this nut (137) is moved on the front end of the elbow (130), an adjustable spray cone is formed.

## Claims

1. Portable agricultural spray, of the type that has a spray rod (1) formed by a rod body (105) ending in a spray nozzle, a valve body (103) connected to a handgrip (101) holding a liquid hose fed from a tank (2) of liquid to be sprayed from which extends a handle (5) extended in a stem (6) ending in a piston (7) that moves axially in a cylinder (8) to pressurise the liquid in the tank (2), **characterised in that** the handle (5) can be extended with respect to the tank (2), which is mounted on a base (3), independent of the handle (5) and fitted with wheels (4) that allow the spray to be inclined and wheeled by pulling the handle (5) in its extended position.

2. Portable agricultural spray according to claim 1 **characterised in that** it has a single-piece lid (9) threaded onto the top of the tank (2), with a central drilling (10) for the passage of the stem (6) into the cylinder (8), and **in that** the cylinder (8) is formed by an upper sleeve (11) and a lower sleeve (12) threaded together, with the upper sleeve (11) threaded into the central drilling (10) with a guide plug (13) between the upper sleeve (11) and the stem (6) that threads into the upper sleeve (11) and forms the movement guide for the stem (6).

3. Portable agricultural spray according to claim 2 **characterised in that** the lid (9) has a depression (33) containing an exterior nozzle (16) to which a hose (17) is coupled for the spray rod (1) which is fixed by a plug (18), and with an interior nozzle (19) on its lower side which is in correspondence with the exterior nozzle (16) to which is connected an outlet pipe (20) in the tank (2), connected to a filter (21) at its other end.

4. Portable agricultural spray according to the preceding claims **characterised in that** the lid (9) contains lugs (28) to anchor belts (29) for carrying it.

5. Portable agricultural spray according to the preceding claims **characterised in that** the lid (9) has a receptacle (22) housing a pressure relief valve (23) with an exterior plug (32) housed in a depression (33) in the lid (9) which also contains the plug (18) for the hose (17) so that neither element protrudes above the highest point of the lid (9).

6. Portable agricultural spray according to the preceding claims **characterised in that** the lower sleeve (12) has a hole in its base that houses a non-return valve (14) that prevents the liquid from rising into the cylinder (8) and the piston (7) has a central cavity (15) on its lower surface in correspondence with the valve (14) which retains the valve (14) so that the piston can make its full stroke to the end of the cylinder (8).

7. Portable agricultural spray according to claim 1 **characterised in that** the base (3) has fluted platforms (25) protruding from its lower surface forming support surfaces for the spray, which can be pressed down to ensure its stable positioning.

8. Portable agricultural spray according to claim 7 **characterised in that** one of these platforms (25) has a hole (26) to hold the end of the spray rod (1).

9. Portable agricultural spray according to claim 1 **characterised in that** the valve body (103) of the spray rod (1) contains a transverse conduit (150), open at both ends, in which a conical shutter (112) moves axially, forming part of a bolt (114), closing the bottom of the transverse conduit (150) with a plug (113) and with the bolt (114) emerging in a sealed manner from the other end of the transverse conduit (150) to receive, via an end stud (120), the action of a helical spring (119) fitted into a perimeter coaxial throat (118) which permanently tends to move the bolt (114) towards the valve's closed position and against which the bolt (114) is moved by the action of a lever (106) hinged to the valve body itself (103).

10. Portable agricultural spray according to claim 9 **characterised in that** in the transverse conduit (150) has three sections of different diameters, a lower sector (111), housing the larger diameter part of the conical shutter (112), an intermediate section (108) which along with the lower sector (111) forms a perimeter step for the valve seat, and an upper sector (116) which is tightly crossed by the bolt (114), which has in this area an O-ring to seal the bolt (114) with respect to the valve body (103), with a fluid inlet conduit (109) discharging into the lower sector (111) of the transverse conduit (150), while the outlet conduit (110) is connected to the intermediate sector (108).

11. Portable agricultural spray according to claim 9 **characterised in that** the operating lever (106) has, located near the valve body (103), a small opening containing a transverse stud (122) on which a trigger (123) is hinged, ending at its lower end in a elbowed arm (128) which, as a function of the relative position between the lever (106) and the handgrip (101), can align with two notches (127, 127') in the valve body (103) so that the swinging of the trigger (123) blocks the lever (106), either in the upper notch (127) or in a notch (127'), the first being the closed valve position and the second the valve's maximum opening position.

12. Portable agricultural spray according to claim 11 **characterised in that** the hinged trigger (123) is kept locked to the lever (106) by a protuberance (125) clipped to a small arm (126) that is the extension of the lever (106) in the non-operational or unlocked position of the elbowed arm (128) with respect to either of the notches (127, 127') for the free operation of the lever (106).

13. Portable agricultural spray according to claims 1 and 9 **characterised in that** the rod body (105) has on its end opposite to the valve body (103) an elbow (130) with the help of a joint (129) with an inner thread in its far end for fixing a nozzle (133) and an outer thread for a nut (137) with an outlet hole (138) through which the pesticide exits to the exterior.

14. Portable agricultural spray according to claim 13 **characterised in that** the nozzle (133) is formed by a hollow cylinder, closed at its front end, which forms with the nut (137) a circular chamber (139) and a front chamber (140), the hollow interior of the nozzle (133) communicating with the circular chamber (139) through two side radial holes (135) while the latter communicates with the front chamber (140) through three helical slots (136) spaced equally around the edge of the end of the nozzle and that are in turn closed with the nut (137).
